# EUROPÄISCHE PATENTSCHRIFT

(11) **EP 2 038 133 B1**
(45) Veröffentlichungstag und Bekanntmachung des Hinweises auf die Patenterteilung: **31.08.2011**
(21) Anmeldenummer: 07722498.8
(22) Anmeldetag: 31.05.2007
(51) Int. Cl.: B60J 7/057

(54) **VERFAHREN UND VORRICHTUNG ZUM BETRIEB EINES CABRIOLETVERDECKS**
METHOD AND DEVICE FOR OPERATING A CABRIOLET HOOD
PROCÉDÉ ET DISPOSITIF DE COMMANDE D'UNE CAPOTE DE CABRIOLET

(30) Priorität: 28.06.2006 DE 102006029686
(43) Veröffentlichungstag der Anmeldung: 25.03.2009
(73) Patentinhaber: Wilhelm Karmann GmbH, 49084 Osnabrück (DE)
(72) Erfinder: ELLERMANN, Peter, 49163 Hunteburg (DE); HÖFERS, Thorsten, 49565 Bramsche (DE)
(74) Vertreter: Kronthaler, Schmidt & Coll.
(86) Internationale Anmeldenummer: PCT/DE2007/000984
(87) Internationale Veröffentlichungsnummer: WO 2008/000211

(56) Entgegenhaltungen:
- WO-A-03/086800
- DE-A1- 3 826 789
- DE-A1- 19 911 592
- DE-C1- 4 204 017

## Beschreibung

Die Erfindung betrifft ein Verfahren sowie eine zur Ausführung des Verfahrens geeignete Vorrichtung zum Betrieb eines Cabrioletverdecks und weiterhin ein mit einer solchen Vorrichtung oder einer Implementierung eines solchen Verfahrens Kraftfahrzeug, insbesondere ein Cabrioletfahrzeug.

Aus der DE 38 26 789 oder der DE 199 11592 A1 ist ein Steuer- und Betätigungssystem für Antriebselemente eines Cabrioletverdecks bekannt, bei dem eine Überlastung einer als Antriebsaggregat fungierenden Pumpe sowie eines nachfolgenden hydraulischen Systems durch ein Sicherheitsventil vermieden werden soll. Aus der DE 42 04 017 ist eine Steuerung für ein Cabrioletverdeck bekannt, bei der für Zwischenstadien während des Bewegungsablaufs des Cabrioletverdecks Drucksollwerte gespeichert sind und diese zum Vergleich mit einem momentanen Druck abrufbar sind.

Nachteilig bei diesen bekannten Ansätzen ist jedoch, dass eine Überwachung des Bewegungsablaufs im Hinblick auf eine eventuelle Kollision des Cabrioletverdecks mit in dessen Bewegungsbahn eintretenden Hindernissen, wie z.B. Ladung oder Personen, nicht möglich ist. Bei der DE 38 26 789 geht es um eine Überlastsicherung, also um eine Verhinderung einer etwaigen Beschädigung des Antriebsaggregats oder der Verdeckkinematik bei Überschreitung eines vorgegebenen Maximalwerts für den Betriebsdruck. Bei der DE 42 04 017 geht es um die Vorgabe unterschiedlicher Drucksollwerte in Ansehung einer während des Bewegungsablaufs erreichten momentanen Position des Cabrioletverdecks, derart, dass je nach Position auf diesem Bewegungsablauf erforderliche Drücke und damit korrelierte Kräfte bereitgestellt werden.

Eine Aufgabe der Erfindung besteht entsprechend darin, eine Vorrichtung und ein korrespondierendes Verfahren anzugeben, mit der bzw. dem eine effiziente Überwachung der Bewegung des Cabrioletverdecks ermöglicht ist.

Diese Aufgabe wird erfindungsgemäß mit den Merkmalen des Anspruchs 1 gelöst. Dazu ist bei einer Vorrichtung zum Betrieb eines Cabrioletverdecks mit einem Antriebsaggregat zur Betätigung des Cabrioletverdecks und Mitteln zur Begrenzung der durch das Antriebsaggregat in das Cabrioletverdeck eingeleiteten oder einleitbaren Kraft eine Abhängigkeit der durch das Antriebsaggregat in das Cabrioletverdeck eingeleiteten oder einleitbaren Kraft von einer Stellung des Cabrioletverdecks vorgesehen.

Mit einer von der Stellung des Cabrioletverdecks abhängigen, durch das Antriebsaggregat aufgebrachten Kraft ist für jede Position oder zumindest für bestimmte Bewegungsabschnitte während des Bewegungsablaufs beim Öffnen oder Schließen eines Cabrioletverdecks sichergestellt, dass niemals "zuviel" Kraft in das Cabrioletverdeck eingeleitet wird. Im Falle einer Kollision des Cabrioletverdecks mit einem Hindernis, beispielsweise einer in die Bewegungsbahn des Cabrioletverdecks eintretenden Person, lässt sich auf diese Weise zwar weder die Kollision vermeiden noch erkennen, es ist aber sichergestellt, dass das Hindernis keinen Kräften ausgesetzt ist, die oberhalb vorgegebener oder vorgebbarer, insbesondere gesetzlicher Grenzwerte liegen, so dass eine ansonsten etwa drohende Verletzung z.B. einer Person sicher ausgeschlossen werden kann.

Eine besonders günstige Realisierung der Abhängigkeit der durch das Antriebsaggregat in das Cabrioletverdeck eingeleiteten oder einleitbaren Kraft von einer Stellung des Cabrioletverdecks ergibt sich, wenn die durch das Antriebsaggregat in das Cabrioletverdeck eingeleitete Kraft entsprechend einem Schwellwert vorgegeben oder vorgebbar ist, der mit einem der Stellung des Cabrioletverdecks entsprechenden Wert eines Kraftprofils korreliert ist. Bevorzugt ist das Antriebsaggregat dabei entsprechend einem Kraftprofil steuer- oder regelbar, wobei mittels des Kraftprofils für den gesamten Bewegungsablauf beim Öffnen oder Schließen des Cabrioletverdecks eine jeweils erforderliche oder maximal zulässige Kraft entweder kontinuierlich oder abschnittsweise vorgebbar ist.

Als Antriebsaggregat kommen bevorzugt ein Hydraulikaggregat oder ein Elektromotor in Betracht. Wenn als Antriebsaggregat ein Hydraulikaggregat vorgesehen ist, erfolgt dessen Steuerung entsprechend dem Kraftprofil zumindest auch durch Öffnen oder Schließen einer im Folgenden als "Bypass" bezeichneten Vorrichtung, bei der ein vom Hydraulikaggregat, mit Druck beaufschlagtes Medium aus einem Leitungssystem zur Einleitung von Kraft in das Cabrioletverdeck abgezogen oder einem Reservoir zugeführt wird. Wenn als Antriebsaggregat ein Elektromotor vorgesehen ist, erfolgt dessen Steuerung entsprechend dem Kraftprofil bevorzugt durch eine so genannte, an sich bekannte Pulsweitenmodulation.

Weiter bevorzugt ist vorgesehen, dass die Abhängigkeit des Schwellwerts von einer Stellung des Cabrioletverdecks aufgrund einer insbesondere äquidistanten Folge von Stützstellen des Kraftprofils darstellbar ist.

Mit der Erfindung und den beschriebenen Ausgestaltungen ist es damit möglich, stets eine definierte Kraft in das Cabrioletverdeck einzuleiten, die für die jeweilige Bewegungssituation erforderlich ist. Auf der anderen Seite wird mit der Verknüpfung des Schwellwerts mit der Stellung des Cabrioletverdecks eine besonders effiziente Überwachung der vollautomatischen Bewegung des Cabrioletverdecks möglich.

Die Erfindung betrifft gleichermaßen auch ein Verfahren zum Betrieb eines Cabrioletverdecks mit der beschriebenen Vorrichtung, sowie den zugehörigen Ausgestaltungen. Nachdem Verfahren zum Betrieb elektrisch ansteuerbarer Aggregate, wie z.B. des Antriebsaggregats, insbesondere in einer Ausführung als Hydraulikaggregat oder Elektromotor, üblicherweise in Software oder so genannter Firmware implementiert sind, betrifft die Erfindung auch ein Computerprogramm mit durch einen Computer ausführbaren Programmcodeanweisungen zur Implementierung des Verfahrens, sowie ein Computerprogrammprodukt, insbesondere ein Speichermedium mit einem durch einen Computer ausführbaren derartigen Computerprogramm. Das Computerprogramm, entweder in einer Implementierung in Software oder Firmware, ist üblicherweise auf einem entweder dem Fahrzeug insgesamt zugeordneten oder speziell zur Steuerung des Cabrioletverdecks vorgesehenen Steuergerät implementiert.

Die mit der Anmeldung eingereichten Patentansprüche sind Formulierungsvorschläge ohne Präjudiz für die Erzielung weitergehenden Patentschutzes. Das oder jedes Ausführungsbeispiel ist nicht als Einschränkung der Erfindung zu verstehen. Vielmehr sind im Rahmen der vorliegenden Offenbarung Abänderungen und Modifikationen möglich, insbesondere solche Varianten, die zum Beispiel durch Kombination oder Abwandlung von einzelnen in Verbindung mit den im allgemeinen oder speziellen Beschreibungsteil beschriebenen, sowie in den Ansprüchen und/oder den Zeichnungen enthaltenen Merkmalen bzw. Elementen oder Verfahrensschritten, für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- Fig. 1: ein Cabrioletfahrzeug mit einem Cabrioletverdeck und
- Fig. 2: eine schematische Darstellung zum Zusammenhang zwi- schen einem Hydraulikaggregat als Beispiel für ein Antriebsaggregat zur Betätigung des Cabrioletver- decks.

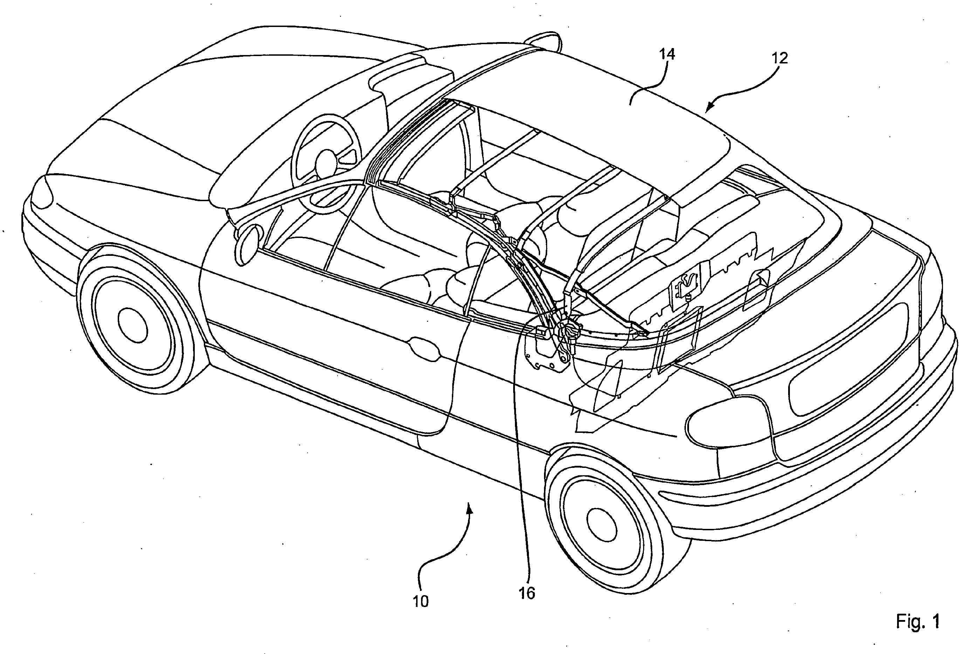

Fig. 1 zeigt ein grundsätzlich an sich bekanntes Cabrioletfahrzeug 10 mit einem ebenfalls an sich bekannten Cabrioletverdeck 12, das einerseits eine Verdeckbespannung 14, sowie andererseits eine Verdeckkinematik 16 umfasst. Das Cabrioletverdeck 12 ist in an sich bekannter Art und Weise zwischen einer geöffneten und einer geschlossenen Position beweglich, wobei das Cabrioletverdeck 12 in der geschlossenen Position einen Innenraum des Cabrioletfahrzeugs 10 überdeckt.

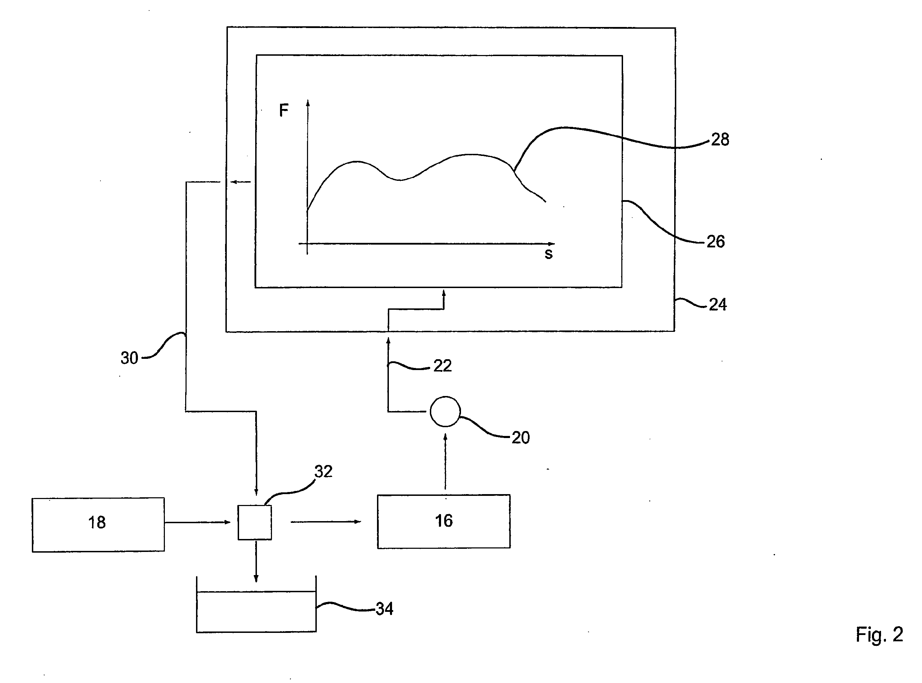

Fig. 2 zeigt in schematisch vereinfachter Darstellung einen Wirkzusammenhang zwischen einem Antriebsaggregat 18 und der Verdeckkinematik 16. Das Antriebsaggregat 18, das z.B. als Hydraulikaggregat ausgeführt sein kann, ist zur Einleitung von Kraft in das Cabrioletverdeck 12 (Fig. 1) vorgesehen, derart, dass die Verdeckkinematik 16 betätigt wird, so dass sich daraus eine Bewegung zum Öffnen oder Schließen des Cabrioletverdecks 12 ergibt. Zur Betätigung der Verdeckkinematik 16 kann z.B. vorgesehen sein, dass ein vom Antriebsaggregat 18 betätigter Hebel (nicht dargestellt) an einem sogenannten Hauptlager (nicht dargestellt) des Cabrioletverdecks angreift, wobei eine Schwenkachse des Hauptlagers einen ersten Freiheitsgrad für die Beweglichkeit der Verdeckkinematik 16 definiert.

Der Verdeckkinematik 16 ist ein Positionssensor 20 oder dergleichen zugeordnet, der zur Erfassung eines Messwertes als Maß für eine Position des Cabrioletverdecks 12 vorgesehen ist. Eine Verarbeitung eines vom Positionssensor 20 gelieferten Positionswertes 22 durch eine Verarbeitungseinheit 24 vorgesehen. Diese umfasst zumindest einen Speicher 26, in dem zumindest ein Profil 28, insbesondere in Form eines Kraft/Wegprofils, hinterlegt ist. Mit jedem Positionswert 22 ist anhand des Profils 28 unmittelbar oder mittelbar, z.B. durch Interpolation, ein Schwellwert 30 verknüpft. Der Schwellwert 30 repräsentiert die für den jeweiligen Positionswert 22 vorgesehene oder zugelassene Kraft. Der Schwellwert wird einem Mittel zur Begrenzung der durch das Antriebs-aggregat 18 in das Cabrioletverdeck 12 eingeleiteten oder einleitbaren Kraft zugeführt. In der dargestellten Ausführungsform fungiert ein im Folgenden als Bypass 32 bezeichnetes steuerbares Ventil als Mittel zur Kraftbegrenzung. Wenn die vom Antriebsaggregat 18 aufgebrachte Kraft den jeweiligen Schwellwert 30 überschreitet, wird der Bypass 32 freigeschaltet, im Falle eines Ventils dieses also zumindest teilweise geöffnet, so dass ein vom Antriebsaggregat 18 mit Druck beaufschlagtes Medium aus einem nicht näher dargestellten Leitungssystem zur Einleitung von Kraft in die Verdeckkinematik 16 des Cabrioletverdecks 12 abgezogen oder einem Reservoir 34 zugeführt wird.

Eine alternative Ausführungsform für den Bypass 32 besteht bei einem Elektromotor (nicht dargestellt) als Antriebsaggregat in einem Pulsweitenmodulator, also einer Einheit, die eine Pulsweitenmodulation durchführt.

Damit lässt sich die Erfindung kurz wie folgt darstellen: Es wird eine Vorrichtung sowie ein korrespondierendes Verfahren zum Betrieb eines Cabrioletverdecks 12 mit einem Antriebsaggregat 18 zur Betätigung des Cabrioletverdecks 12 und Mitteln zur Begrenzung der durch das Antriebsaggregat 18 in das Cabrioletverdeck 12 eingeleiteten oder einleitbaren Kraft, angegeben, bei der bzw. bei dem eine Abhängigkeit der durch das Antriebsaggregat 18 in das Cabrioletverdeck 12 eingeleiteten oder einleitbaren Kraft von einer Stellung des Cabrioletverdecks 12 vorgesehen ist bzw. besteht, so dass die in das Cabrioletverdeck 12 eingeleitete Kraft einen vorgegebenen oder vorgebbaren Schwellwert 30 nicht überschreitet und damit selbst im Falle einer Kollision des Cabrioletverdecks 12 mit einem Hindernis die auf das Hindernis ausgeübte Kraft minimal ist, zumindest unterhalb gesetzlich oder auf sonstige Weise vorgegebner Grenzwerte liegt.

### BEZUGSZEICHENLISTE

- 10: Cabrioletfahrzeug
- 12: Cabrioletverdeck
- 14: Verdeckbespannung
- 16: Verdeckkinematik
- 18: Antriebsaggregat
- 20: Positionssensor
- 22: Positionswert
- 24: Verarbeitungseinheit
- 26: Speicher
- 28: Profil
- 30: Schwellwert
- 32: Bypass
- 34: Reservoir

## Patentansprüche

1. Vorrichtung zum Betrieb eines Cabrioletverdecks (12) mit einem Antriebsaggregat (18) zur Betätigung des Cabrioletverdecks (12) und Mitteln (32) zur Begrenzung der durch das Antriebsaggregat (18) in das Cabrioletverdeck (12) eingeleiteten oder einleitbaren Kraft,
**gekennzeichnet durch**
eine Abhängigkeit der **durch** das Antriebsaggregat (18) in das Cabrioletverdeck (12) eingeleiteten oder einleitbaren Kraft von einer Stellung des Cabrioletverdecks (12).

2. Vorrichtung nach Anspruch 1,
wobei die durch das Antriebsaggregat (18) in das Cabrioletverdeck (12) eingeleitete Kraft entsprechend einem Schwellwert (30) vorgegeben oder vorgebbar ist, der mit einem der Stellung des Cabrioletverdecks (12) entsprechenden Wert eines Profils (28) korreliert ist.

3. Vorrichtung nach Anspruch 1 oder 2,
wobei das Antriebsaggregat (18) ein Hydraulikaggregat ist.

4. Vorrichtung nach Anspruch 3,
wobei das Hydraulikaggregat als Antriebsaggregat (18) entsprechend dem Profil (28) durch Öffnen oder Schließen eines Bypasses (32) steuerbar ist.

5. Vorrichtung nach Anspruch 1 oder 2,
wobei das Antriebsaggregat (18) ein Elektromotor ist.

6. Vorrichtung nach Anspruch 5,
wobei der Elektromotor als Antriebsaggregat (18) entsprechend dem Profil (28) durch Pulsweitenmodulation steuerbar ist.

7. Verfahren zum Betrieb eines Cabrioletverdecks (12) mit Mitteln gemäß Anspruch 1,
wobei die durch das Antriebsaggregat (18) in das Cabrioletverdeck (12) eingeleitete Kraft auf einen von einer Stellung des Cabrioletverdecks (12) abhängigen Schwellwert (30) begrenzt wird.

8. Verfahren nach Anspruch 7,
wobei das Antriebsaggregat (18) entsprechend einem Profil (28) gesteuert wird.

9. Verfahren nach Anspruch 8,
wobei der Schwellwert (30) mit einem der Stellung des Cabrioletverdecks (12) entsprechenden Wert des Profils (28) korreliert ist.

10. Verfahren nach Anspruch 8 oder 9,
wobei ein als Antriebsaggregat (18) fungierendes Hydraulikaggregat entsprechend dem Profil (28) durch Öffnen oder Schließen eines Bypasses (32) gesteuert wird.

11. Verfahren nach Anspruch 8 oder 9,
wobei ein als Antriebsaggregat (18) fungierender Elektromotor entsprechend dem Profil (28) durch Pulsweitenmodulation gesteuert wird.

12. Cabrioletfahrzeug mit einer Vorrichtung gemäß einem der Ansprüche 1 bis 6 und/oder einer Implementierung des Verfahrens nach einem der Ansprüche 7 bis 11.

13. Computerprogramm mit durch einen Computer ausführbaren Programmcodeanweisungen zur Implementierung des Verfahrens nach einem der Ansprüche 7 bis 11, wenn das Computerprogramm auf einem Computer ausgeführt wird.

14. Computerprogrammprodukt, insbesondere Speichermedium, mit einem durch einen Computer ausführbaren Computerprogramm gemäß Anspruch 13.

## Claims

1. Device for operating a cabriolet top (12) with a drive unit (18) for actuating the cabriolet top (12), and means (32) for limiting the force introduced or able to be introduced by the drive unit (18) into the cabriolet top (12),
**characterized by**
a dependence of the force introduced or able to be introduced by the drive unit (18) into the cabriolet top (12) on a position of the cabriolet top (12).

2. Device according to Claim 1,
wherein the force introduced by the drive unit (18) into the cabriolet top (12) is predetermined or is able to be predetermined in accordance with a threshold value (30), which is correlated with a value of a profile (28) corresponding the position of the cabriolet top (12).

3. Device according to Claim 1 or 2,
wherein the drive unit (18) is a hydraulic unit.

4. Device according to Claim 3,
wherein the hydraulic unit is able to be controlled as drive unit (18) in accordance with the profile (28) by opening or closing of a bypass (32).

5. Device according to Claim 1 or 2,
wherein the drive unit (18) is an electric motor.

6. Device according to Claim 5,
wherein the electric motor is able to be controlled as drive unit (18) in accordance with the profile (28) by pulse width modulation.

7. Method for operating a cabriolet top (12) by means according to Claim 1,
wherein the force introduced by the drive unit (18) into the cabriolet top (12) is limited to a threshold value (30) dependent on a position of the cabriolet top (12).

8. Method according to Claim 7,
wherein the drive unit (18) is controlled according to a profile (28).

9. Method according to Claim 8,
wherein the threshold value (30) is correlated with a value of the profile (28) corresponding to the position of the cabriolet top (12).

10. Method according to Claim 8 or 9,
wherein a hydraulic unit functioning as drive unit (18) is controlled according to the profile (28) by opening or closing of a bypass (32).

11. Method according to Claim 8 or 9,
wherein an electric motor functioning as drive unit (18) is controlled according to the profile (28) by pulse width modulation.

12. Cabriolet vehicle with a device according to one of Claims 1 to 6 and/or an implementation of the method according to one of Claims 7 to 11.

13. Computer programme with programme code commands able to be executed by a computer for the implementation of the method according to one of Claims 7 to 11, when the computer programme is executed on a computer.

14. Computer programme product, in particular memory medium, with a computer programme according to Claim 13, able to be executed by a computer.

## Revendications

1. Dispositif pour faire fonctionner une capote de cabriolet (12) comprenant un groupe d'entraînement (18) pour l'actionnement de la capote de cabriolet (12) et des moyens (32) pour limiter la force introduite ou pouvant être introduite par le groupe d'entraînement (18) dans la capote de cabriolet (12),
**caractérisé par**
une dépendance entre la force introduite ou pouvant être introduite par le groupe d'entraînement (18) dans la capote de cabriolet (12) et une position de la capote de cabriolet (12).

2. Dispositif selon la revendication 1,
la force introduite par le groupe d'entraînement (18) dans la capote de cabriolet (12) étant prédéfinie ou pouvant être prédéfinie en fonction d'une valeur seuil (30), laquelle est corrélée avec une valeur d'un profil (28) correspondant à la position de la position de la capote de cabriolet (12).

3. Dispositif selon la revendication 1 ou 2,
le groupe d'entraînement (18) étant un groupe hydraulique.

4. Dispositif selon la revendication 3,
le groupe hydraulique pouvant être commandé en tant que groupe d'entraînement (18) en fonction du profil (28) par l'ouverture ou la fermeture d'une dérivation (32).

5. Dispositif selon la revendication 1 ou 2,
le groupe d'entraînement (18) étant un moteur hydraulique.

6. Dispositif selon la revendication 5,
le moteur électrique pouvant être commandé en tant que groupe d'entraînement (18) en fonction du profil (28) par modulation par largeur d'impulsion.

7. Procédé pour faire fonctionner une capote de cabriolet (12) comprenant des moyens selon la revendication 1,
la force introduite par le groupe d'entraînement (18) dans la capote de cabriolet (12) étant limitée à une valeur seuil (30) dépendante d'une position de la capote de cabriolet (12).

8. Procédé selon la revendication 7,
le groupe d'entraînement (18) étant commandé en fonction d'un profil (28).

9. Procédé selon la revendication 8,
la valeur seuil (30) étant corrélée avec une valeur du profil (28) correspondant à la position de la capote de cabriolet (12).

10. Procédé selon la revendication 8 ou 9,
un groupe hydraulique faisant office de groupe d'entrainement (18) étant commandé en fonction du profil (28) par l'ouverture ou la fermeture d'une dérivation (32).

11. Procédé selon la revendication 8 ou 9,
un moteur électrique faisant office de groupe d'entraînement (18) étant commandé en fonction du profil (28) par modulation par largeur d'impulsion.

12. Véhicule cabriolet équipé d'un dispositif selon l'une quelconque des revendications 1 à 6 et/ou d'une mise en oeuvre du procédé selon l'une quelconque des revendications 7 à 11.

13. Produit-programme informatique comprenant des instructions de code de programme exécutables par un ordinateur pour la mise en oeuvre du procédé selon l'une quelconque des revendications 7 à 11 lorsque le programme informatique est exécuté sur un ordinateur.

14. Produit-programme informatique, en particulier support de mémoire, comprenant un programme informatique exécutable par un ordinateur selon la revendication 13.
